# EUROPÄISCHE PATENTANMELDUNG

(11) **EP 3 179 036 A1**
(43) Veröffentlichungstag der Anmeldung: **14.06.2017**
(21) Anmeldenummer: 16201371.8
(22) Anmeldetag: 30.11.2016
(51) Int. Cl.: F01D 5/14, F01D 9/04

(54) **RINGRAUMKONTURIERUNG EINER GASTURBINE**

(30) Priorität: 07.12.2015 DE 102015224420
(71) Anmelder: MTU Aero Engines AG, 80995 München (DE)
(72) Erfinder: Pernleitner, Martin, 85221 Dachau (DE); Mahle, Inga, 81669 München (DE); Wolfrum, Nina, 85622 Feldkirchen (DE); Brettschneider, Markus, 85757 Karlsfeld (DE); Schlemmer, Markus, 84048 Mainburg / Sandelzhausen (DE)

(57) **Zusammenfassung**

Die Erfindung betrifft einen Schaufelring für eine Gasturbine, insbesondere Fluggasturbine, mit mehreren Schaufeln (12), die in Umfangsrichtung (UR) nebeneinander angeordnet sind, wobei die Schaufeln (12) einen sich im Wesentlichen in radialer Richtung erstreckenden Strömungsabschnitt aufweisen mit einer konvexen Saugseite (16), einer konkaven Druckseite (14), einer Vorderkante (18) und einer Hinterkante (20), wobei die Saugseite (16) und die Druckseite (14) durch die Vorderkante (18) und die Hinterkante (20) miteinander verbunden sind, wobei die Schaufeln (12) radial innen und/oder radial außen in einen Ringabschnitt (22) des Schaufelrings (10) übergehen, wobei der Ringabschnitt (22) eine erste Schaufel (12) und eine zweite Schaufel (12), die zueinander benachbart sind, zwischen der Saugseite (16) der ersten Schaufel (12) und der Druckseite (14) der zweiten Schaufel (12) verbindet. Erfindungsgemäß wird vorgeschlagen, dass der Ringabschnitt (22) als konturierte Fläche (24) ausgebildet ist mit in radialer Richtung unterschiedlichen Höhen, wobei der Ringabschnitt (22) einen höchsten Flächenabschnitt (26) und einen tiefsten Flächenabschnitt (30) aufweist, wobei der höchste Flächenabschnitt (26) direkt angrenzend an die Druckseite (14) der zweiten Schaufel (12) ausgebildet ist.

## Beschreibung

Die vorliegende Erfindung betrifft einen Schaufelring für eine Gasturbine, insbesondere Fluggasturbine, mit mehreren Schaufeln, die in Umfangsrichtung (UR) nebeneinander angeordnet sind, wobei die Schaufeln einen sich im Wesentlichen in radialer Richtung erstreckenden Strömungsabschnitt, das so genannte Schaufelblatt, aufweisen mit einer konvexen Saugseite, einer konkaven Druckseite, einer Vorderkante und einer Hinterkante, wobei die Saugseite und die Druckseite durch die Vorderkante und die Hinterkante miteinander verbunden sind, wobei die Schaufeln radial innen und/oder radial außen in einen Ringabschnitt des Schaufelrings übergehen, wobei der Ringabschnitt eine erste Schaufel und eine zweite Schaufel, die zueinander benachbart sind, zwischen der Saugseite der ersten Schaufel und der Druckseite der zweiten Schaufel verbindet. Ein derartiger Ringabschnitt wird auch als radial äußeres bzw. radial inneres Deckband bzw. "end wall" bezeichnet.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt. Weitere Angaben wie "vorne" oder "hinten" beziehen sich grundsätzlich auf die Hauptströmungsrichtung von Gas in einer Gasturbine bzw. in zugehörigen Turbinen- bzw. Verdichterstufen, sofern sich aus dem Kontext nicht explizit oder implizit etwas anderes ergibt.

Bei Schaufelringen von Gasturbinen ergeben sich zu einer Hauptströmungsrichtung, die im Wesentlichen tangential zur Beschaufelung verläuft, auch Strömungen quer dazu sowie entsprechende Strömungswirbel. Diese Querströmungen und die Strömungswirbel, welche zusammen auch Sekundärströmung genannt werden, sind störend und wirken sich nachteilig auf den Wirkungsgrad der Gasturbine aus aufgrund von ungünstigen aerodynamischen Strömungsbedingungen.

Aufgabe der Erfindung ist es, einen Schaufelring bereitzustellen, bei dem die obigen Nachteile vermieden werden können.

Zur Lösung dieser Aufgabe wird vorgeschlagen, dass der Ringabschnitt als konturierte Fläche ausgebildet ist mit in radialer Richtung unterschiedlichen Höhen, wobei der Ringabschnitt einen höchsten Flächenabschnitt und einen tiefsten Flächenabschnitt aufweist, wobei der höchste Flächenabschnitt direkt angrenzend an die Druckseite der zweiten Schaufel ausgebildet ist.

Im Sinne der vorliegenden Erfindung wird dabei unter dem "radial höchsten Flächenabschnitt" ein Flächenabschnitt des Ringabschnitts verstanden, welcher sich am weitesten in den zwischen zwei in Umfangsrichtung benachbarten Schaufeln gebildeten Strömungskanal hineinersteckt. Dementsprechend wird unter einem "radial tiefsten Flächenabschnitt" ein Flächenabschnitt verstanden, welcher sich am wenigstens weit in den zwischen zwei in Umfangsrichtung benachbarten Schaufeln gebildeten Strömungskanal hineinersteckt. Mit anderen Worten sind die Begriffe "höchster" und "tiefster" hier auf das Volumen des Strömungskanals bezogen. Bei einem radial inneren Ringabschnitt, auf welchen sich die vorliegende Erfindung bevorzugt bezieht, weist somit der "radial höchste Flächenabschnitt" einen größeren Abstand zur Rotations- oder Maschinenachse der Strömungsmaschine auf als der "radial tiefste Flächenabschnitt", wenn der Schaufelring bestimmungsgemäß in einer Strömungsmaschine montiert ist, wohingegen sich dies in einem radial äußeren Ringabschnitt genau umgekehrt verhält.

Eine derartige Ausgestaltung der Ringabschnitte zwischen zwei benachbarten Schaufeln führt zu einer verbesserten aerodynamischen Strömung in den Randbereichen der Druckseite der Schaufeln. Der höchste Flächenabschnitt oder ein höchster Punkt des Ringabschnitts liegt dabei genau an der Druckseite des Schaufelprofils an.

Vorzugsweise liegt der höchste Flächenabschnitt zwischen der Druckseite und einer gedachten Verbindungslinie, welche die Vorderkante und die Hinterkante der zweiten Schaufel verbindet.

Weiterbildend wird vorgeschlagen, dass der tiefste Flächenabschnitt benachbart zur Saugseite der ersten Schaufel angeordnet ist, wobei der Ringabschnitt vom tiefsten Flächenabschnitt zur Saugsseite hin ein ansteigendes Profil aufweist.

Das hier unter Bezugnahme auf eine erste Schaufel und eine zweite Schaufel Gesagte gilt selbstverständlich für jedes Schaufelpaar des Schaufelringes, das durch zwei benachbarte Schaufeln gebildet wird. Die Verwendung von "erster" und "zweiter" dient lediglich der besseren Ansprechbarkeit der benachbarten Schaufeln, stellt aber keineswegs eine Einschränkung auf zwei spezifische Schaufeln des Schaufelrings dar. Insoweit ist die Ausgestaltung aller Ringabschnitte zwischen den Schaufeln des Schaufelrings gleich.

Die Lage der höchsten Flächenabschnitte ist bevorzugt so gewählt, dass die höchsten Flächenabschnitte zumindest abschnittsweise, vorzugsweise vollständig, in einen Axialereich liegen, der sich von maximal 15% der axialen Erstreckung der Schaufel stromaufwärts bis maximale 15% der axialen Erstreckung der Schaufel stromabwärts in Bezug auf eine gedachte Verbindungslinie erstreckt, welche die Schwerpunkte einer Querschnittsfläche der Schaufeln in Umfangsrichtung (UR) verbindet. Insbesondere kann die Lage der höchsten Flächenabschnitte so gewählt sein, dass die gedachte Verbindungslinie die höchsten Flächenabschnitte schneidet.

Die tiefsten Flächenabschnitte können in axialer Richtung (AR) vor der Verbindungslinie liegen. In der Regel schneidet die gedachte Verbindungslinie die tiefsten Flächenabschnitte nicht.

Weiter ist es bevorzugt, dass die Kontur des Ringabschnitts vom höchsten Flächenabschnitt aus entlang der Druckseite der zweiten Schaufel zur Vorderkante und zur Hinterkante der zweiten Schaufel hin und zur Saugseite der ersten Schaufel hin abfällt.

Bezogen auf eine Nulllinie wird vorgeschlagen, dass der höchste Flächenabschnitt eine größere Höhe aufweist als die Tiefe bzw. negative Höhe des tiefsten Flächenabschnitts, insbesondere ist der Absolutwert (Betrag) der Höhe des höchsten Flächenabschnitts etwa doppelt so groß wie der Absolutwert (Betrag) der Tiefe bzw. negativen Höhe des tiefsten Flächenabschnitts.

Die Erfindung betrifft auch einen Laufschaufelring einer Turbinenstufe einer Gasturbine, insbesondere Fluggasturbine, wobei der Laufschaufelring als Schaufelring mit einem der oben beschriebenen Merkmale ausgebildet ist.

Ferner betrifft die Erfindung einen Leitschaufelring einer Turbinenstufe einer Gasturbine, insbesondere Fluggasturbine, wobei der Leitschaufelring als Schaufelring mit einem der oben beschriebenen Merkmale ausgebildet ist.

Schließlich betrifft die Erfindung auch eine Gasturbine, insbesondere Fluggasturbine, die wenigstens einen Schaufelring oder Laufschaufelring oder Leitschaufelring mit einem der oben beschriebenen Merkmale aufweist.

Nachfolgend wird die Erfindung unter Bezugnahme auf die anliegenden Figuren beispielhaft und nicht einschränkend beschrieben.
Fig. 1 zeigt eine vereinfachte schematische Perspektivdarstellung eines Ausschnitts eines Schaufelrings mit Höhenlinien, welche die Kontur eines Ringabschnitts repräsentieren.
Fig. 2 zeigt ein vereinfachtes qualitatives Längsprofil eines Ringabschnitts zwischen zwei Schaufeln entlang einer Linie SL der Fig. 1

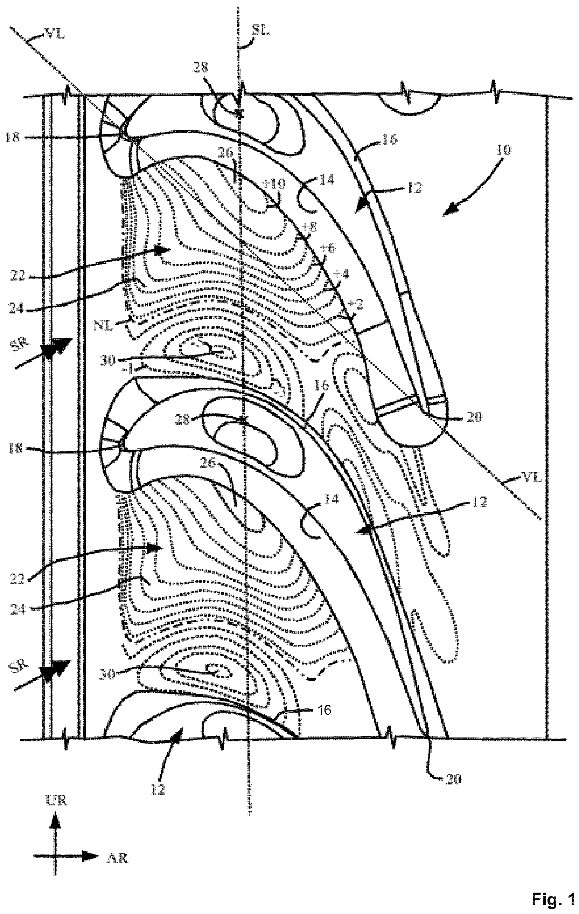

Ein in Fig. 1 teilweise dargestellter Schaufelring 10 umfasst mehrere in Umfangsrichtung UR nebeneinander angeordnete Schaufeln 12. Die Schaufeln 12 weisen eine jeweilige Druckseite 14, eine Saugseite 16, sowie eine Vorderkante 18 und eine Hinterkante 20 auf. Zwischen zwei benachbarten Schaufeln 12 liegt zwischen der Saugseite 16 einer ersten Schaufel (untere Schaufel in Fig. 1) und der Druckseite 14 einer zweiten Schaufel 12 (obere Schaufel in Fig. 1) ein Ringabschnitt 22 des Schaufelrings 10. Der Ringabschnitt 10 ist eine sich in Umfangsrichtung UR und in Axialrichtung AR erstreckende Fläche, welche zwei benachbarte Schaufeln 12 miteinander verbindet. Die Schaufeln 12 und die dazwischen liegenden Ringabschnitte 22 sind vorzugsweise einstückig miteinander ausgebildet, insbesondere kann der Schaufelring 10 aus einem oder aus mehreren Gußteil(en) hergestellt sein.

Der flächige Ringabschnitt 22 weist eine konturierte Oberfläche 24 auf, die einem von Gas durchströmten Ringraum zugewandt ist, in den die Schaufeln 12 in radialer Richtung vorstehen. In Figur 1 sind zur Illustration Höhenlinien eingezeichnet, wobei eine Nulllinie NL strichpunktiert dargestellt ist. Ausgehend von der Nulllinie NL erhebt sich der Ringabschnitt 22 bzw. seine Oberfläche 24 in radialer Richtung nach außen, was durch die punktierten Höhenlinien +2 bis +10 illustriert ist. In diesem Ausführungsbeispiel, in dem ein Innendeckband dargestellt ist, vertieft sich ausgehend von der Nulllinie der Ringabschnitt 22 bzw. seine Oberfläche in radialer Richtung nach innen, was durch die gestrichelten Höhenlinien -1 bis - 5 illustriert ist. Die für die Höhenlinien verwendeten Zahlen sind eine lediglich qualitative Illustration und geben keine realen quantitativen Werte wieder. Eine Angabe +2 bedeutet also nicht, dass es sich um 2 Einheiten einer bestimmten Maßeinheit wie etwa Millimeter oder Zehntelmillimeter handelt.

Der Ringabschnitt 22 weist einen durch die Höhenlinie +10 angedeuteten höchsten Flächenabschnitt 26 auf. Dieser höchste Flächenabschnitt 26 liegt unmittelbar an der Druckseite 14 der Schaufel 12 an. Nimmt man eine gedachte Verbindungslinie VL, welche die Vorderkante 18 und die Hinterkante 20 der Schaufel 12 verbindet, liegt die höchste Flächenabschnitt 26 in Umfangsrichtung UR zwischen dieser Verbindungslinie VL und der Druckseite 14, vorzugsweise liegt der höchste Flächenabschnitt 26 vollständig, also mit seiner gesamten Fläche (entsprechend etwa der Begrenzung durch die Höhenlinie +10) innerhalb einer Kontur, die von der Druckseite 14 und der Verbindungslinie VL gebildet wird. Nimmt man für benachbarte Schaufeln 12 einen jeweiligen Schwerpunkt 28 einer Querschnittsfläche des Schaufelprofils an und verbindet diese Schwerpunkte 28 in Umfangrichtung UR, schneidet diese Schwerpunktverbindungslinie SL den höchsten Flächenabschnitt 26.

Der Ringabschnitt 22 bzw. seine Oberfläche 24 weist ferner einen tiefsten Flächenabschnitt 30 auf, der durch die Höhenlinie -5 angedeutet wird. Dieser tiefste Flächenabschnitt 30 liegt benachbart zur Saugseite 16 der Schaufel 12. Allerdings liegt der tiefste Flächenabschnitt 30 nicht unmittelbar an der Saugseite 16 an, sondern weist in Umfangsrichtung UR einen Abstand zur Saugseite 16 auf. Der tiefste Flächenabschnitt 30 liegt bevorzugt auch in axialer Richtung AR vor der Schwerpunktverbindungslinie SL, wobei der Bezug "vor" sich auf die Hauptströmungsrichtung von Gas durch den Schaufelring 10 bezieht, welche in der Fig. 1 durch den Doppelpfeil SR illustriert ist.

Ausgehend von dem höchsten Flächenabschnitt 26 fällt der Ringabschnitt 22 bzw. dessen Oberfläche 24 entlang der Druckseite 14 zur Vorderkante 18 und zur Hinterkante 20 ab. Ferner fällt der Ringabschnitt 22 auch in Umfangsrichtung zur Saugseite 16 der benachbarten Schaufel 12 ab, insbesondere bis auf das Niveau des tiefsten Flächenabschnitts 30, von wo aus der Ringabschnitt zur Saugseite 16 hin wieder etwas ansteigt.

Geht man davon aus, dass zwischen zwei Höhenlinien sowohl in Plusrichtung als auch in Minusrichtung der gleiche Abstand in radialer Richtung vorliegt, weist der höchste Flächenabschnitt 26 eine größere Höhe auf als die Tiefe bzw. negative Höhe des tiefsten Flächenabschnitts 30, insbesondere ist die Höhe des höchsten Flächenabschnitts 26 etwa doppelt so groß wie die Tiefe bzw. negative Höhe des tiefsten Flächenabschnitts 30. Dabei werden die Höhe bzw. die Tiefe als absolute Werte (Beträge) miteinander verglichen ohne das entsprechende Vorzeichen bezüglich der Nulllinie zu beachten.

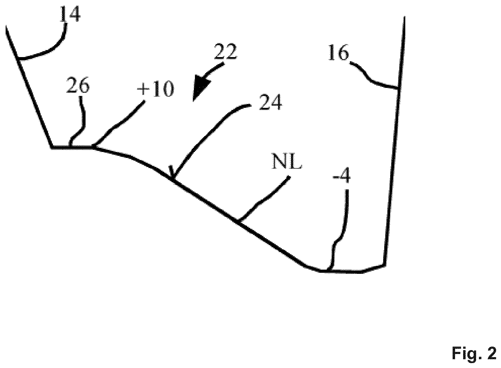

Fig. 2 zeigt ein vereinfachtes Längsprofil in Umfangsrichtung UR entlang der Schwerpunktverbindungslinie SL der Fig. 1 zwischen der Druckseite 14 der zweiten (in der Fig. 1 oberen) Schaufel (12) und der Saugseite 16 der ersten (in der Fig. 1 unteren) Schaufel 12. Aus diesem Profil der Oberfläche 24 des Ringabschnitts 22 wird ersichtlich, dass der höchste Flächenabschnitt 26 sich unmittelbar an die Druckseite 14 der zweiten Schaufel 12 anschließt. Der höchste Flächenabschnitt 26 bildet in diesem Ausführungsbeispiel eine Art Plateau auf dem illustrierten Niveau +10 bezogen auf die Nulllinie NL.

Allerdings muss dieser höchste Flächenabschnitt 26 nicht zwingend eben ausgebildet sein, sondern kann auch in sich eine Krümmung aufweisen. In diesem Fall ist die Krümmung jedoch so gering, dass keine Stelle des höchsten Flächenabschnitts 26 das Niveau +12 erreicht oder gar darüber liegt. Weist der höchste Flächenabschnitt einen singulären Hochpunkt auf, so liegt dieser vorzugsweise unmittelbar an der Druckseite 14 der Schaufel 12 an.

Das Profil der Oberfläche 24 fällt dann von dem höchsten Flächenabschnitt 26 in Richtung der Saugseite 16 der ersten Schaufel 12 mit teilweise unterschiedlichen Steigungen ab, passiert das Nullniveau bei NL und fällt weiter ab bis auf das Niveau -5. Ausgehend von diesem Niveau -5 steigt das Profil Oberfläche 24 dann in Richtung der Saugseite 16 leicht an, bevor der Ringabschnitt 22 in die Saugseite 16 der ersten Schaufel 12 übergeht.

In der schematischen Schnittansicht der Fig. 2 sind die Druckseite 14 und die Saugseite 16 der beiden Schaufeln 12 geradlinig dargestellt. Auch dies muss jedoch nicht so sein. So kann es aus strukturmechanischen Gründen zum Beispiel vorteilhaft sein, die Druckseite 14 und/oder Saugseite 16 mit einem so genannten Fillet, welcher einen Rundungsradius ähnlich einer Kehlnut aufweist, in den Ringabschnitt 22 übergehen zu lassen. Derartige Fillets sollen jedoch gemäß der vorliegenden Erfindung einen Bestandteil der Schaufel 12 und nicht des Ringabschnitts 22 sein.

Durch die vorgestellte Konturierung des Ringabschnitts 22 zwischen zwei benachbarten Schaufeln 12 eines Schaufelrings, können insbesondere durch die Anordnung des höchsten Flächenabschnitts 26 direkt anschließend an die Druckseite 14 verbesserte aerodynamische Strömungsverhältnisse erreicht werden, die zu einer verbesserten Effizienz und einem verbesserten Wirkungsgrad der Gasturbine führen.

### Bezugszeichenliste

- 10: Schaufelring
- 12: Schaufel
- 14: Druckseite
- 16: Saugseite
- 18: Vorderkante
- 20: Hinterkante
- 22: Ringabschnitt
- 24: Oberfläche
- 26: Höchster Flächenabschnitt
- 28: Schwerpunkt
- 30: Tiefster Flächenabschnitt
- AR: Axialrichtung
- NL: Nullniveau bzw. Nulllinie
- UR: Umfangsrichtung
- VL: Verbindungslinie
- SL: Schwerpunktverbindungslinie
- SR: Hauptströmungslinie

## Patentansprüche

1. Schaufelring (10) für eine Gasturbine, insbesondere Fluggasturbine, mit mehreren Schaufeln (12), die in Umfangsrichtung (UR) nebeneinander angeordnet sind, wobei die Schaufeln (12) einen sich im Wesentlichen in radialer Richtung erstreckenden Strömungsabschnitt aufweisen mit einer konvexen Saugseite (16), einer konkaven Druckseite (14), einer Vorderkante (18) und einer Hinterkante (20), wobei die Saugseite (16) und die Druckseite (14) durch die Vorderkante (18) und die Hinterkante (20) miteinander verbunden sind, wobei die Schaufeln (12) radial innen und/oder radial außen in einen Ringabschnitt (22) des Schaufelrings (10) übergehen, wobei der Ringabschnitt (22) eine erste Schaufel (12) und eine zweite Schaufel (12), die zueinander benachbart sind, zwischen der Saugseite (16) der ersten Schaufel (12) und der Druckseite (14) der zweiten Schaufel (12) verbindet, **dadurch gekennzeichnet, dass** der Ringabschnitt (22) als konturierte Fläche (24) ausgebildet ist mit in radialer Richtung unterschiedlichen Höhen, wobei der Ringabschnitt (22) einen höchsten Flächenabschnitt (26) und einen tiefsten Flächenabschnitt (30) aufweist, wobei der höchste Flächenabschnitt (26) direkt angrenzend an die Druckseite (14) der zweiten Schaufel (12) ausgebildet ist.

2. Schaufelring (10) nach Anspruch 1, **dadurch gekennzeichnet, dass** der höchste Flächenabschnitt (26) zwischen der Druckseite (14) und einer gedachten Verbindungslinie (VL) liegt, welche die Vorderkante (18) und die Hinterkante (20) der zweiten Schaufel (12) verbindet.

3. Schaufelring (10) nach Anspruch 1 oder 2, **dadurch gekennzeichnet, dass** der tiefste Flächenabschnitt (30) benachbart zur Saugseite (16) der ersten Schaufel (12) angeordnet ist, wobei der Ringabschnitt (22) vom tiefsten Flächenabschnitt (30) zur Saugseite (16) hin ein ansteigendes Profil aufweist.

4. Schaufelring (10) nach einem der vorhergehenden Ansprüche, **dadurch gekennzeichnet, dass** der höchste Flächenabschnitt (26) zumindest abschnittsweise, vorzugsweise vollständig, in einen Axialbereich liegt, der sich von maximal 15% der axialen Erstreckung der Schaufel (12) stromaufwärts bis maximale 15% der axialen Erstreckung der Schaufel (12) stromabwärts in Bezug auf eine gedachte Verbindungslinie (SL) erstreckt, welche die Schwerpunkte einer Querschnittsfläche der Schaufeln (12) in Umfangsrichtung (UR) verbindet.

5. Schaufelring (10) nach Anspruch 4, **dadurch gekennzeichnet, dass** die tiefsten Flächenabschnitte (30) in axialer Richtung (AR) vor der Verbindungslinie (SL) liegen.

6. Schaufelring (10) nach einem der vorhergehenden Ansprüche, **dadurch gekennzeichnet, dass** die Kontur des Ringabschnitts (22) vom höchsten Flächenabschnitt (26) aus entlang der Druckseite (14) der zweiten Schaufel (12) zur Vorderkante (18) und zur Hinterkante (20) der zweiten Schaufel (12) hin und zur Saugseite (16) der ersten Schaufel (12) hin abfällt.

7. Schaufelring (10) nach einem der vorhergehenden Ansprüche, **dadurch gekennzeichnet, dass** bezogen auf eine Nulllinie (NL), der höchste Flächenabschnitt (26) eine größere Höhe (+10) aufweist als die Tiefe bzw. negative Höhe (-5) des tiefsten Flächenabschnitts (30), insbesondere ist der Absolutwert der Höhe des höchsten Flächenabschnitts (26) etwa doppelt so groß wie der Absolutwert der Tiefe bzw. negativen Höhe des tiefsten Flächenabschnitts.

8. Laufschaufelring einer Turbinenstufe einer Gasturbine, insbesondere Fluggasturbine, **dadurch gekennzeichnet, dass** er als Schaufelring (10) nach einem der vorhergehenden Ansprüche ausgebildet ist.

9. Leitschaufelring einer Turbinenstufe einer Gasturbine, insbesondere Fluggasturbine, **dadurch gekennzeichnet, dass** er als Schaufelring (10) nach einem der Ansprüche 1 bis 7 ausgebildet ist.

10. Gasturbine, insbesondere Fluggasturbine, **gekennzeichnet durch** wenigstens einen Schaufelring (10) nach einem der Ansprüche 1 bis 7 oder **durch** wenigstens einen Laufschaufelring nach Anspruch 8 oder **durch** wenigstens einen Leitschaufelring nach Anspruch 9.
